# EUROPEAN PATENT APPLICATION

(11) **EP 4 835 721 A1**
(43) Date of publication of application: **04.11.2026**
(21) Application number: 25173457.0
(22) Date of filing: 30.04.2025
(51) Int. Cl.: G06F 30/15, G06F 11/3668, G06F 30/20, G06F 30/27, G06F 119/02

(54) **METHODS, SYSTEMS, AND COMPUTER PROGRAM PRODUCTS FOR SYSTEM EVALUATION**

(71) Applicant: Helsing GmbH, 81671 Munich (DE)
(72) Inventor: DETOMMASO, Gianluca, 81671 Munich (DE); FERIANC, Martin, 81671 Munich (DE); DONINI, Michele, 81671 Munich (DE); SILVER, Will, 81671 Munich (DE)
(74) Representative: Maucher Jenkins Patent- und Rechtsanwälte Partnerschaft mbB

(57) **Abstract**

A computer-implemented method of evaluating a system, the method comprising:
determining evaluation data suitable to evaluate the system; determining an Operational Domain, OD, of the system, wherein the OD is indicative of one or more conditions under which the system may operate; partitioning the OD into one or more OD partitions, wherein an OD partition indicates a subset and/or range of the one or more conditions; determining evaluation result data comprising a corresponding evaluation result dataset for each OD partition, wherein the evaluation result data is determined based on the evaluation data and, preferably, on system output data generated or generable by the system based on the evaluation data; and providing a final output indicating for which of the one or more OD partitions the corresponding evaluation result dataset meets a predetermined criterion, in particular a threshold.

## Description

### Technical Field

The present disclosure relates to systems, methods, and computer program products for evaluating a system. The present disclosure is applicable in the field of machine learning.

### Background

A frequent problem in machine learning is evaluating a system, for example a system comprising a machine learning algorithm. Such a system may be designed to operate under predefined conditions. It is desired to determine if the system works across the whole range of these conditions or only under a part of these conditions.

A known solution includes discretising any numerical range defining the conditions and testing the system for each value of the discretised range. This solution is, however, inefficient.

There is a need for systems and methods that overcome these shortcomings.

### Summary

Disclosed and claimed herein are systems, methods, and devices for evaluating systems.

A first aspect of the present disclosure relates to a method of evaluating a system. The method comprises the following steps:
- determining evaluation data suitable to evaluate the system;
- determining an Operational Domain, OD, of the system, wherein the OD is indicative of one or more conditions under which the system may operate;
- partitioning the OD into one or more OD partitions, wherein an OD partition indicates a subset and/or range of the one or more conditions;
- determining evaluation result data comprising a corresponding evaluation result dataset for each OD partition, wherein the evaluation result data is determined based on the evaluation data and, preferably, on system output data generated or generable by the system based on the evaluation data; and
- providing a final output indicating for which of the one or more OD partitions the corresponding evaluation result dataset meets a predetermined criterion, in particular a threshold.

This has the advantage that the system is evaluated in the OD partitions. The method thus provides an organized and structured way to explore the OD, which may be a high-dimensional space, wherein each dimension may correspond to one of the conditions. The method allows defining the partitions taking into account any of the conditions and thereby allows controlling all dimensions of the OD. An operational domain (OD) of a system may be defined as the attributes of the physical surroundings in which the system operates. The OD may be or comprise an operational design domain (ODD) of the system. An ODD of a system may be defined as a subset of the operational domain within which the system is specifically designed to operate. The final output can thus indicate for each of the OD partitions if the system functions according to the predetermined criterion. This allows identifying OD partitions for which the system functions. It further allows determining the OD partitions for which the system does not function, in order to determine where and how the system needs improvement.

Determining the evaluation result data may comprise determining the system output data by the system based on the evaluation data.

This allows direct evaluation of the system. The system preferably processes the evaluation data, in particular after receiving the evaluation data as an input, to generate the system output data. Put differently, the system is evaluated on the evaluation data.

Determining the evaluation result data may comprise determining the system output data by an emulator operable to emulate the system based on the evaluation data. The emulator may thus comprise any algorithm operable to predict the output of the system without using the system.

This allows determining the evaluation result in cases where no system output data is available from the system itself. This is in particular relevant in cases where evaluation data is hard to collect of at least a part of the OD.

Determining the system output data by the system and/or emulator may comprise generating a first subset of the system output data based on a first subset of the evaluation data corresponding to a first OD partition, and determining a first corresponding evaluation result dataset based on the first subset of system output data.

This allows determining the system output data by the emulator for an OD partition for which no system output data are generable by the system, whereas system output data may be determined by the system for cases for which system output data generated by the system are available. For example, the system output data may comprise a series of measurements taken, or system outputs evaluated, when testing the system. If evaluation input data is not available for any reason, and therefore there is no system output data, then it can be replaced by emulated system output data. Emulated system output data may be based on further evaluation data, further system output data, and/or further evaluation result data for one or more different OD partitions.

Determining the system output data may comprise determining the first subset of the system output data by the system and determining a second subset of the system output data by the emulator a second OD partition of the OD partitions based on the first corresponding evaluation result dataset.

This allows evaluating the system, at a first time, for the first OD partition based on actual output of the system. However, this may not be possible for the second OD partition, e.g. because the system output data cannot be determined by the system due to shortcomings in the evaluation process, lack of availability of corresponding conditions, or other reasons. Therefore, for the second OD partition, the system output data are emulated in this example. The emulation benefits from the use of information on evaluation results obtained on the first OD partition. In exemplary embodiments, the system may be evaluated for a plurality of first OD partitions, and the system output data for the second OD partition may be emulated based on the evaluation result datasets corresponding to the first OD partitions.

Determining the evaluation result data may comprise determining a first evaluation result dataset for at least one first OD partition, and determining a second evaluation result dataset for at least one second OD partition based on the first evaluation result dataset, preferably by:
- extrapolating and/or interpolating the first evaluation result dataset; and/or
- determining, via a data generator, the second evaluation result dataset.

The data generator may comprise any algorithm that is able to predict the performance of the system within one or more OD partitions without having the real input nor using the real system. However, it is preferred if the data generator comprises a machine learning model trained on previously determined evaluation data, in particular evaluation metadata, and corresponding previously determined evaluation result data.

The second OD partition may be the same as or different from the first OD partition. It is preferred to determine the first evaluation result dataset for at least two first OD partitions, wherein all first OD partitions are different from the second OD partition. It is further preferred to select two first OD partitions comprising higher and lower values of a same category to facilitate interpolation of the first evaluation result dataset.

Determining evaluation result data may comprise one or more of:
- comparing the system output data to a ground truth related to, in particular comprised in, the evaluation data, wherein the ground truth is preferably generated by a reference system; and/or
- comparing the system output data to a user-determined reference, in particular a threshold.

The ground truth may be determined by receiving an input from a user, or by loading from a storage. The reference system may comprise a system that has been evaluated. The reference system may, in particular, comprise an algorithm that has been demonstrated to generate system output data that is evaluated positively. Put differently, the reference system may comprise any system that is known to operate in the OD or ODD correctly, so that its output can be used as a ground truth.

The evaluation data may comprise one or more of:
- an evaluation dataset preferably comprising system input data processable by the system;
- one or more criteria according to which the system may be evaluated;
- a ground truth for evaluating the system, and/or
- metadata of the evaluation dataset, wherein the metadata are preferably indicative of the conditions.

The ground truth data may comprise any data against which any system outputs may be compared. The metadata may include any attributes of the evaluation dataset, such as operational conditions under which the system is or was operating when processing the associated evaluation dataset.

The system output may be exclusively based on the evaluation dataset, and the evaluation result may be based on the metadata. This allows evaluating a performance of the system on data determined in different conditions and using further knowledge about the conditions.

In an embodiment, the evaluation data may comprise one or more video streams captured by a drone. A video stream may comprise video data in which an object appears. In this embodiment, the metadata may comprise a position of the drone, a position of a target, background, weather, light, wind, distractors, occlusions, timestamp, shadows. In this embodiment, ground truth data may comprise video streams annotated with one or more bounding boxes around the object.

Partitioning the OD into the OD partitions may include:
- performing the partitioning based on user input, and/or
- performing the partitioning based on the evaluation data.

The user input may comprise a user provided Operational Domain (OD) definition.

Performing the partitioning based on user input allows determining the partitions based on expert knowledge. Performing the partitioning based on evaluation data means performing the partitioning based on the evaluation dataset and/or the metadata.

Partitioning the OD into the OD partitions may include
- partitioning at least one numerical range of the OD into intervals, preferably intervals of equal length;
- partitioning the OD such that each subset of the evaluation data corresponding to an OD partition contains an equal amount of data;
- partitioning only a part of the OD into a plurality of OD partitions;
- partitioning the OD according to one or more categories;
- partitioning a first variable of the OD depending on a value of second variable of the OD; and/or
- partitioning the OD based on a user input.

Partitioning at least one numerical range of the OD into intervals has the advantage that each partition may relate to one interval. The intervals have preferably an equal length. The intervals may be chosen, e.g. by user input, according to expected evaluation results, i.e. smaller (finer) intervals for parameter values in regions where the evaluation results are expected to change depending on the value within the numerical range. The thereby determined partitions may, optionally, be further partitioned according to other categories.

Partitioning the OD such that each subset of the evaluation data corresponding to an OD partition contains an equal amount of data has the advantage that the amount of processing for each partition may be limited in a predetermined way. In particular, each OD partition may be defined such that it contains a predetermined amount of data, which is preferably chosen to match a known processing capability of the system or any apparatus used for determining the evaluation result data, which may generally comprise embedded systems. This is advantageous in particular when processing sensor data, which may comprise large amounts of data, such as long video feeds.

Partitioning only a part of the OD into a plurality of OD partitions has the advantage that the system is evaluated on only the part that is interesting for evaluation. The part may comprise an ODD.

Partitioning a first category of the OD depending on a value of second category of the OD has the advantage that dependencies between the categories can be exploited. For example, the second category may comprise a weather condition, e.g. sunny or rainy, under which a system, such as a UAV, may operate. In this case, a more fine-grained partitioning of a first category, i.e. a flight altitude, may be chosen for rainy weather conditions if the performance of the system is known to be less predictable in this case.

The method may further comprise re-partitioning the OD into one or more new OD partitions, wherein re-partitioning is based on
- any user input;
- the evaluation data;
- the system output data;
- one or more of the evaluation result datasets; and/or
- the or a previous partitioning and/or re-partitioning of the OD.

Re-partitioning may be done substantially in the same way as partitioning.

It is preferred to re-partition iteratively.

By suitably determining the partitions, computing effort can be reduced significantly. For example, re-partitioning may comprise splitting a partition into two or more sub- partitions in response to a detection that evaluation result data related to the partition is ambiguous. The sub-partitions may then be evaluated separately so that an unambiguous result (system functions on the sub-partition or not) is obtained for each of the sub-partitions. This means that the granularity of the evaluation may be adjusted according to evaluation result data determined in the evaluation process.

Determining the evaluation result data may include determining performance metrics and/or data metrics, wherein
- the performance metrics are indicative of a quality of the system output data, and
- the data metrics are indicative of a quality of the evaluation data, and
- wherein providing the final output includes providing an indication for which of the one or more OD partitions the performance metrics and/or data metrics meet a, preferably respective, predetermined criterion.

The quality of the system output data may relate to a quality indication for the system itself and may comprise an accuracy, a precision, and/or recall of the system, in particular machine learning model. The quality of the evaluation data may comprise data coverage of the OD.

The system comprises a machine learning, ML, algorithm.

The evaluation dataset may comprise sensor data, preferably one or more images. Applying the method to an evaluation dataset comprising sensor data is preferable because system output data related to sensor data, e.g. generable by the system upon processing sensor data, may be difficult to obtain. For example, the sensor data related to a certain condition, such as rainy weather, may be difficult to obtain in cases where the test site is located in an area that has only limited rainfall. In this case, the evaluation may benefit particularly from the option to partition and emulate as described above.

In embodiments, the evaluation dataset may comprise video streams captured by a drone. The system may be comprised in the drone. In this embodiment, the metadata may comprise a position of the drone, a position of a target, background, weather, light, wind, distractors, occlusions, timestamp, shadows.

The method thus allows determining a performance of a mathematical model, e.g., for processing of sensor data, in particular images. The operational domain may comprise, e.g., images at a predetermined contrast level, or images determined by a predetermined type of sensor.

A second aspect of the present disclosure relates to a system comprising one or more processors and one or more storage devices, wherein the system is configured to perform the computer-implemented method of the first aspect of the present disclosure.

A third aspect of the present disclosure relates to a computer program product for loading into a memory of the system. The computer program comprises instructions, that, when executed by a processor of the system, cause the system to execute a method of the first aspect of the present disclosure.

In an embodiment, a non-transitory computer-readable storage medium is provided that stores instructions executable by one or more processors. The instructions comprise any of the steps of a method of the first and/or second aspect of the present disclosure.

### Brief description of the drawings

The features, objects, and advantages of the present disclosure will become more apparent from the detailed description set forth below when taken in conjunction with the drawings in which like reference numerals refer to similar elements.
- Fig. 1 shows a block diagram of an Operational Domain (OD) 100 and a corresponding evaluation dataset 106;
- Fig. 2 shows a flow chart of a method 200;
- Fig. 3 shows a block diagram of data structures and algorithms; and
- Fig. 4 shows a schematic diagram of a definition of portions of an Operational Domain.

### Detailed description of the preferred embodiments

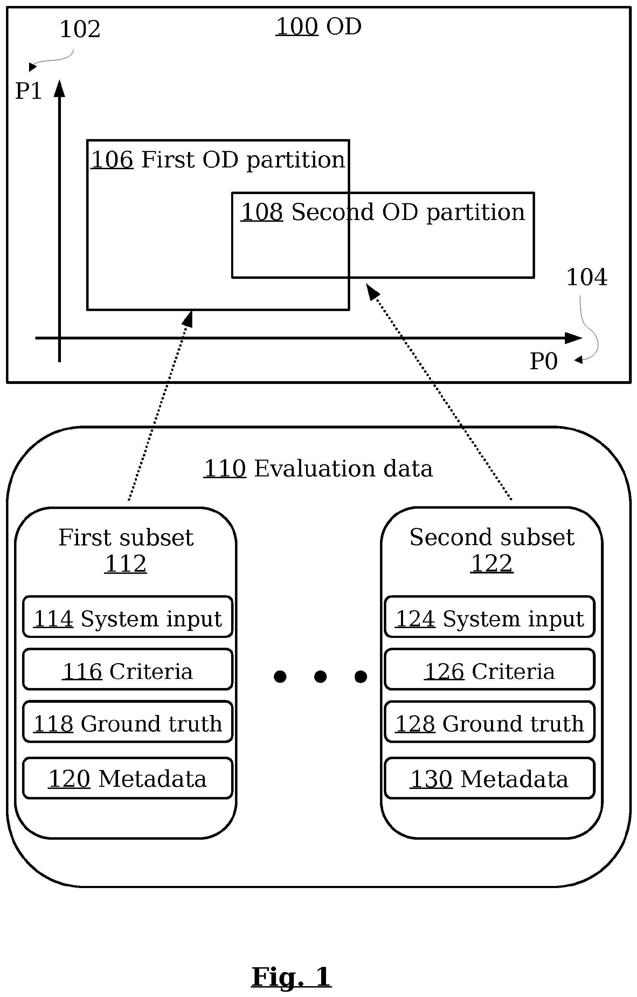

Figure 1 shows a block diagram of an Operational Domain (OD) 100 and corresponding evaluation data 110 according to an example.

The OD 100 defines one or more conditions under which the system may operate, e.g. operate according to a predetermined specification. The specification may relate to the system as a whole or one or more functions of the system. In particular, the OD may define one or more conditions, e.g. physical surroundings, under which one or more functions and/or features of the system may to operate. The OD may be or comprise an ODD. An ODD of a system may be defined as a subset of the operational domain 100 within which the system is specifically designed to operate. Since the method relates to evaluating a system, the OD may be an ODD in many embodiments. However, the method is not limited to that and any kind of OD may be determined, partitioned, and/or otherwise processed according to the method.

The conditions include, but are not limited to, factors like geographic location, weather conditions, time of day, regulatory requirements, and the expected range of operational scenarios. Understanding the ODD is crucial for defining the limitations and capabilities of systems, especially in autonomous and semi-autonomous systems, to ensure they operate safely and effectively within their intended environments.

The OD in this example comprises two conditions 102, 104 that are continuous parameters P0 and P1. Realistic ODs may comprise a much larger number of conditions, but here only two are shown for simplicity.

For example, the system may comprise an aerial vehicle, P0 may be an altitude, and P1 may be a speed over ground. The surface defined by P0 and P1 therefore defines a range of altitudes and speeds at which the aerial vehicle may operate, i.e. an OD. In case of a small drone, the altitude may range from 0 to 100 km, and the speed may range from 0 to 10000 km/h. By contrast, an ODD of the same drone may have the same conditions (altitude and speed), but the altitude may range only from 0 to 50 m and the speed may range only from 0 to 10 km/h. It may be of interest to determine if the system operates also in parts of the OD that do not form part of the ODD, such as altitudes above 50 m.

In different embodiments, one or more of the conditions may comprise one or more instances of a category, e.g. if the OD relates to sunny, cloudy, and rainy weather, then three subsets may be defined related to each of the three weather conditions.

A subset of the one or more conditions may comprise a sub-range of a range to which the OD relates. If the OD relates to an altitude of an aerial vehicle between 0 and 20 km, then a first OD partition may relate to any altitude between 0 and 100 m, a second OD partition may relate to any altitude between 100 m and 200 m etc.

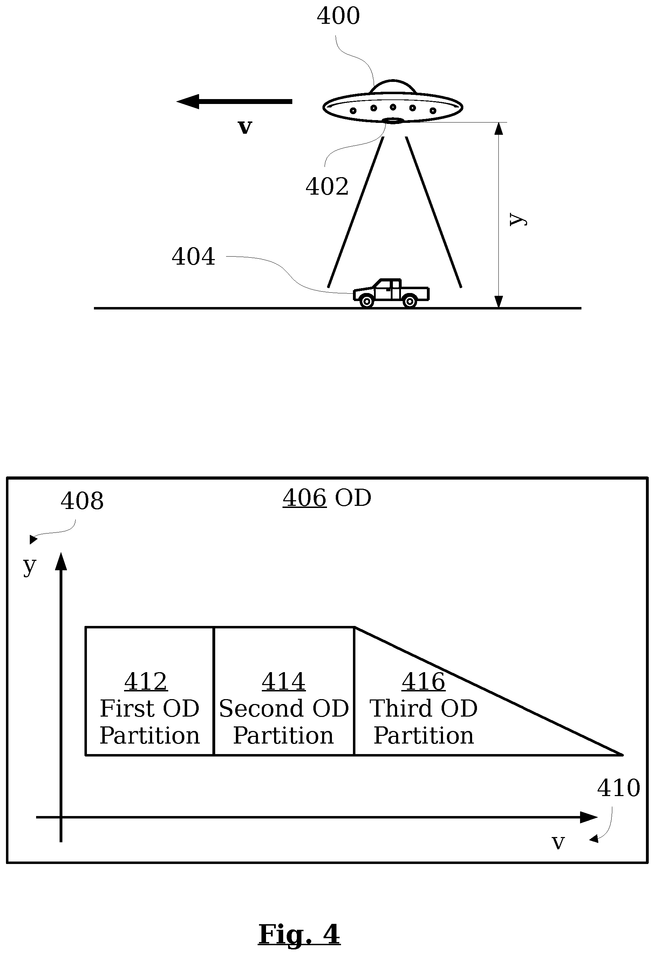

The OD partitions 106 and 108 in the present example are defined as two overlapping partitions that relate to different intervals on each of conditions 102, 104. In other examples, OD partitions may be defined as non-overlapping contiguous partitions, cf. e.g. Fig. 4.

The evaluation data 110 comprises any data suitable to evaluate the system. For the exemplary case of an aerial vehicle, an evaluation may comprise evaluation of a flight control system of the aerial vehicle that is configured to receive and process sensor data about obstacles, altitude, and speed and to determine control signals for control surfaces and/or propulsion systems of the aerial vehicle. The evaluation data in this example may comprise both system input data, such as the sensor data, and system output data, such as the control signals.

The first subset 112 may comprise system input data 114. The system input data 114 may comprise any data that can be received as input and processed by the system. The system input data 114 are preferably determined in a way identical to the way corresponding input data of the system are determined in regular operation, e.g. by user input, measurement by sensors, and/or preprocessing.

The first subset 112 may further comprise one or more criteria 116 that any output generated by the system has to fulfil to be considered as operating, or functioning, as designed. This may include thresholds or ranges of value. The criteria 116 may be determined by user input and/or processing.

The first subset 112 may further comprise ground truth data 118 which is generable by the system and indicative of an expected output of the system if the system is operating as designed in the corresponding OD partition. The ground truth data 118 may comprise synthetic data or data determined by a reference system, which may be more powerful than the system. The ground truth data 118 may comprise data generated by the system and manually determined as indicative of correct operation of the system

The first subset 112 may further comprise metadata 120 of the other data included in the first subset 112. The metadata 120 may comprise an indication of the OD partition or any other information relevant to evaluating the system.

The second subset 122 may comprise system input data 124, conditions 126, ground truth data 128, and/or metadata 130 corresponding to second OD partition 108. Second subset 122 may be substantially similar or identical in structure to first subset 112. A realistic set of evaluation data 110 may contain any number of further subsets which are also similar or identical in structure to the first and second subsets, wherein each subset corresponds to an OD partition.

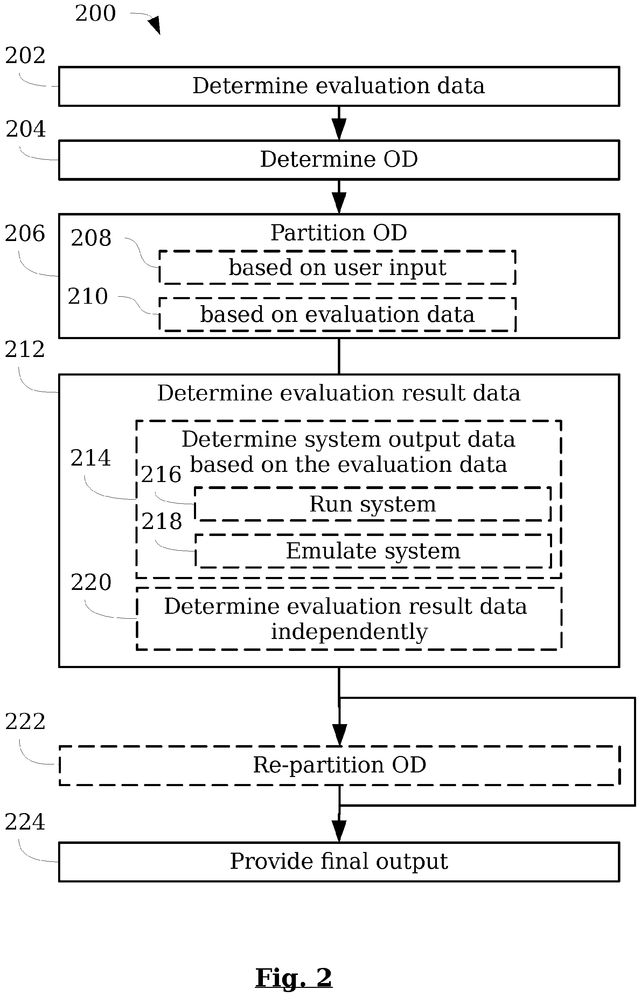

Figure 2 shows a flow chart of a method 200 according to an example. The method allows testing a system, in particular a system comprising a machine learning (ML) algorithm.

At step 202, evaluation data are determined. Evaluation data are data that are suitable for evaluating the system. Determining the evaluation data may comprise receiving the evaluation data, in particular receiving the evaluation data via a user input.

At step 204, an Operational Domain (OD) 100 of the system to be tested is determined. Determining the OD may comprise receiving the OD, in particular via a user input.

Since the method relates to evaluating in which one or more partitions the system is functional, the method may in many cases relate to determining and partitioning an ODD, and the criteria (see below) may relate to the operations for which the system is designed. However, the method is not limited to this. The system may be evaluated across its entire OD. The OD partitions may be chosen as partitions lying outside the ODD in order to determine if the system meets a criterion that is unrelated to the purposes for which the system was designed. This allows determining if a system is suitable for other uses than originally intended.

At step 206, the OD is partitioned into one or more OD partitions. An OD partition may be or form part of an OD or ODD. Partitioning the ODD may include, 208, partitioning based on a user input. Partitioning the ODD may include, 210, partitioning based on evaluation data.

A numerical range of the OD may be partitioned into intervals, preferably intervals of equal length. Additionally or alternatively, the OD may be partitioned such that each subset of the evaluation data corresponding to an OD partition contains an equal amount of data.

In embodiments, only a part of the OD is partitioned into a plurality of OD partitions. A first variable of the OD may be partitioned depending on a value of second variable of the OD. The OD may be partitioned based on a user input.

More specifically, the following types of partitioning may be used:
Homogeneous partitioning: The OD may be partitioned according to categories that comprise numerical ranges by splitting a range into sub-ranges of equal length. For example, for an altitude within 100m and 500m, a homogeneous partitioning with 4 ranges would correspond to the partitions [100, 200]; ]200, 300]; ]300, 400]; ]400, 500]. This method helps maintain consistent analysis across various data segments, especially when the segments have differing levels of significance.

Mesh partitioning: The mesh may be determined by the user by providing an arbitrary mesh of interest according to the use case, for example [100, 150]; ]150,250]; ]250, 450]; ]450, 500].

Percentile partitioning: A range may be partitioned such that every partition contains a same amount of data points. For example, the [20th, 40th, 60th, 80th] percentiles of altitude data may be used as partitions. By dividing data into subsets with equal amounts, processing can be balanced efficiently. This approach is particularly beneficial for systems with known processing limits, ensuring no single partition overwhelms the system. It facilitates efficient analysis and management of large datasets, such as video feeds. It is therefore preferred to partition the range so that each of the partitions comprises an amount of data points that can be processed by the system in a predetermined time.

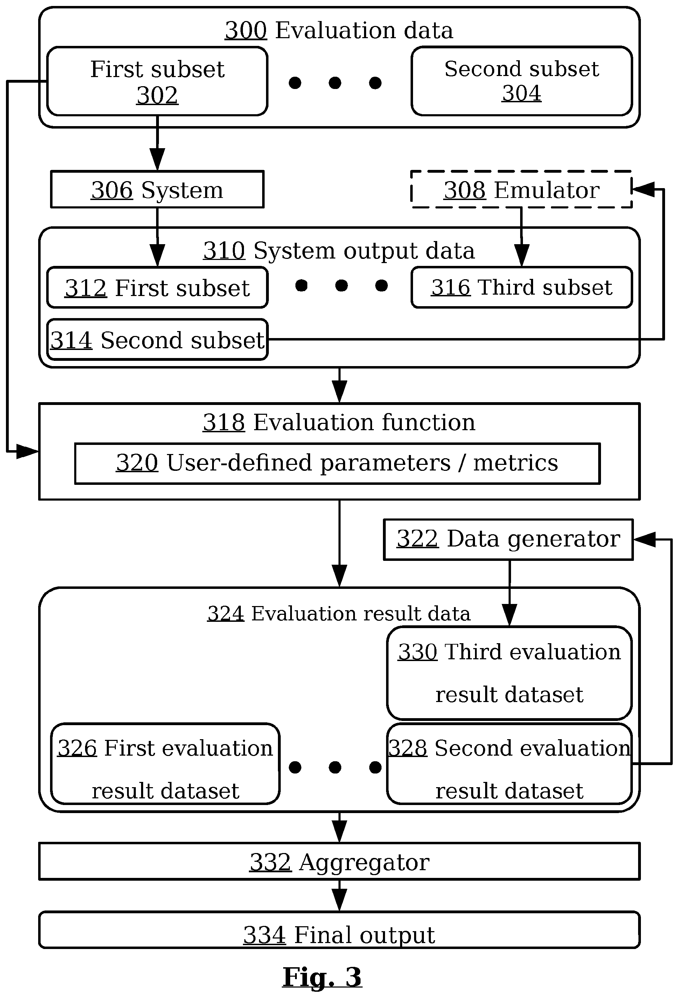

It is particularly advantageous to partition the OD into partitions comprising equal amounts of data if the system output data for at least one of the partitions is emulated, e.g. by emulator 308 (Fig. 3). This is because having partitions with equal amounts of data can lead to reduced variability within each partition. This uniformity allows the emulation process to operate under more controlled conditions, potentially increasing the accuracy and reliability of the simulated system outputs.

It is particularly advantageous to partition the OD into partitions comprising equal amounts of data if the evaluation result data are determined by a data generator, such as data generator 322 (Fig. 3). A data generator can benefit from this balanced partitioning by learning patterns and relationships within a consistent dataset. This can lead to more robust and reliable evaluation results, as the generator can identify and replicate underlying structures within the data more effectively.

Cluster partitioning: Data points may be grouped into clusters, i.e. by determining similarities of data points. For example, suppose that all the data lies between 250 and 300 m. There would be no reason to split between 0 and 250 or 300 and 500 since there is no data. This allows to save computation and make sure that similar data are evaluated together.

Categorical partitioning techniques are useful for heterogeneous data. They enable focused analysis on specific categories, potentially yielding more meaningful insights and enhancing the relevance and accuracy of the evaluation.

Singleton categorical partitioner: This can be applied for categorical constraints (e.g., weather can be sunny, cloudy, rainy or foggy). It consists in splitting each category individually, so that data of different categories are evaluated separately and can be compared.

Grouped categorical partitioner: In many cases, it is not necessary to split all possible categories. For example, it might not be necessary to split between cloudy and sunny. Instead, a grouped partitioning like [sunny, cloudy], [rainy], [foggy] may be formed so that data that are either sunny or cloudy are evaluated together. This is important because having more data in a single partition generally means more accurate results, and less partition elements mean less computation.

Dependency-based partitioning: It is further preferred to partition the OD based on existing dependencies in data. For example, understanding how weather conditions affect evaluations at different altitudes. It tailors the granularity of partitioning to reflect real-world dependencies, improving the specificity and applicability of results.

Conditional range partitioner: These are range constraint partitioners that are conditioned on a categorical variable. For example, a range for altitude might be allowed to be [100, 500] when it is sunny, but only [100, 300] when it is rainy.

Custom multi-dimensional partitioners: Constraints can be multi-dimensional in nature; they need not be on single variables but rather they can interplay between many variables. It follows that also partitioners can be multi-dimensional. It is preferred to allow users to define their own custom constraints and partitioners according to their needs.

Providing the final output may include indicating characteristics and/or metadata of new evaluation data and/or suitable training data.

The evaluation result data may further be determined based on a predetermined evaluation function, in particular wherein the predetermined evaluation function includes one or more user-defined parameters and/or metrics. In this way, the question whether the system actually works for specific OD partitions can be answered based on user-defined parameters and metrics.

Determining the evaluation result data may include determining evaluation data for a specific partitioned OD based on evaluation data of a plurality of other partitioned ODs.

This may be done via interpolation or extrapolation. In this way, meaningful outputs for partitions can be generated for which no, not enough or not good enough evaluation data is provided.

At step 212, the evaluation result data are determined. The step preferably includes conducting an evaluation of the system and/or loading an evaluation result from a prior evaluation. The evaluation result data comprise a corresponding evaluation result dataset for each OD partition. The evaluation result data is determined based on the evaluation data.

At optional step 214, the evaluation result data is determined based on system output data generated or generable by the system based on the evaluation data. The system output data may comprise data that is available and may be loaded from a database. For example, the system may have generated system output data based on available evaluation data, and the data may be stored in a storage. Alternatively or additionally, the system output data may be received by a user input.

Alternatively or additionally, determining the evaluation result data may comprise generating, 216, the system output by the system based on the evaluation data. Put differently, the system may be evaluated on the evaluation data, e.g. by receiving the evaluation data as an input and processing the evaluation data to generate the system output data. The system output data may be processed by an evaluation function to determine the evaluation result data. This provides a direct evaluation of the system.

However, the system may, in addition or alternatively, be emulated, 218, by any device or process that allows determining system output data in another way, e.g. emulator 308 shown in Fig. 3. Such determination of system output data for a partition may be based on evaluation data that is available for a different partition. In particular, emulation may comprise generation of synthetic system output data. Such synthetic data may be processed by the evaluation function to obtain the evaluation result data if the synthetic data is in principle generable by the system. It is not generally necessary to adapt the evaluation function for this purpose.

The evaluation result data may be determined, 220, independently from the system. For example, the evaluation result data may be obtained by user input. The evaluation result data for at least a partition may comprise interpolated values determined based on evaluation result datasets related to one or more different partitions. The evaluation result data may be determined by the data generator 322 shown in Fig. 3.

At optional step 222, the OD is re-partitioned to obtain new partitions. Re-partitioning may be done in substantially the same way as the partitioning step 206. However, it is preferred to re-partition the OD depending on evaluation results. For example, the OD may be re-partitioned into smaller partitions every time the evaluation result data does not meet a user-defined criterion, in order to determine more precisely at which parts of an OD partition insufficient results are to be observed.

At step 224, a final output is provided. The final output may comprise a user output.

Figure 3 shows a block diagram of data structures and algorithms according to an example.

The evaluation data 300 may be identical or similar to the evaluation data 110 as shown in Fig. 1. It comprises a first subset 302 related to a first OD partition and a second subset 304 related to a second OD partition. The evaluation data may comprise further subsets relating to further OD partitions. For example, if the system 306 to be evaluated is a vehicle, the evaluation data 300 may comprise information on position and velocity of the vehicle and positions and velocities of vehicles in proximity to the vehicle. The evaluation data may comprise metadata of the evaluation dataset 300.

The system may be evaluated in respect of each of the subsets in at least one of the ways described below. In principle, any combination of these different methods is possible for different subsets.

As a first option, system input data from one or more, or all, subsets may be processed by the system 306 to be evaluated. During such processing of input data comprised in the first subset 302, the system 306 generates system output data subset 312. The system output data subset 312 may then be processed by an evaluation function 318 to determine if the system generates output that conforms to one or more criteria. The evaluation function 318 may access and apply any criteria, or compare the result data to a ground truth, defined in the first subset 302 of the evaluation data 300 to generate a first evaluation result dataset 324 indicative of whether the system operates according to the criteria in the corresponding first OD portion. The evaluation result dataset 324 is preferably indicative of a performance of the system operating under the subset of the one or more conditions defined by the corresponding OD partition.

It is further preferred to direct the evaluation process by the evaluation function. For example, the evaluation data 300 may only comprise the system input data. In this case, the method 200 may comprise causing the system to process the system input data for each of the OD partitions to generate corresponding output data. In the exemplary case of an aerial vehicle, this means that test flights are conducted in the different OD subsets to obtain system output data, which may comprise a speed actually reached. The system output data may then be evaluated, e.g. by comparison with a criterion, such as a predetermined threshold, to obtain an evaluation result data indicative of whether the criterion is met.

As a second option, system output data 310 may comprise a second subset 312 comprising data generable by the system when operating in the second subset 304 of the operational domain 100. The second subset may comprise synthetic data or data determined by or inferred from past test runs of system 306. The second subset 312 may be determined by a user input.

If, for example, the system is a flight control system of an aerial vehicle, the system output data may be recorded in a plurality of test settings of actual flight tests at different altitudes and speeds. The evaluation data 300 may comprise a plurality of data items, such as measurement results, each of which pertains to one subset defined by an OD partition.

As a third option, system output data 310 may comprise a third subset 314 comprising data generated by an emulator 308 of the system. This is advantageous if it is difficult to determine the output of the system under the conditions of the related OD. For example, system output data indicative of operation of an aerial vehicle under particular weather conditions, e.g. sunny weather, may not be readily available if no tests could be done under these conditions. The emulator 308 preferably determines the third subset 316 based on one or more other subsets of the system output data related to one or more OD partitions different to the OD partition related to the third subset 316.

The evaluation function 318 is configured to evaluate the system output data 310 by comparison to one or more criteria. The criteria may be stored in the evaluation data 300 subsets corresponding to the OD partition to which the system output data subset corresponds.

In the illustrative case of an aerial vehicle, the system input data comprised in the evaluation data 300 may comprise a target flight altitude and speed that may be supplied to the flight control system. The system output data may comprise measurement data, e.g. a speed actually reached by the aerial vehicle. The system evaluation method 200 (see Fig. 2) allows processing the measurement data to provide a final output that indicates for which subset the evaluation data 300 the actually reached speed meets a criterion, such as a predetermined threshold, such as 10 percent below the target speed.

A fourth option relates to complementing the evaluation result data 324 with a third evaluation result dataset 330 generated by a data generator 322. This allows determining evaluation results by interpolating if no system output is available. Compared to the third option, this has the advantage that it is not necessary to emulate the system and process the result by the evaluation function 318. The data generator 322 preferably generates the third evaluation result dataset 330 based on evaluation result data generated for one or more OD partitions other than that related to the third evaluation result dataset 330. This may include interpolation of evaluation data.

The evaluation result data 324 may be aggregated by aggregator 332 to obtain final output 334.

Fig. 4 shows a schematic diagram of a definition of portions of an operational domain 100 according to an example.

In this example, the system 400 is an unmanned aerial vehicle (UAV) traveling at altitude y and velocity v. A sensor 402 is attached to the UAV 400. The sensor 402 is in this case a downward-facing camera having a field of view including an object 404, which is a vehicle in this example. The system 400 may comprise a computing device comprising processing and storage devices that executes a vision model, such as a ResNet algorithm, that allows identifying, classifying, and/or localizing any object, such as vehicle 404.

The operational domain 100 of the present exemplary embodiment is defined using two parameters as categories of the OD, i.e. the altitude 408 and the speed (magnitude of velocity) 410. The OD comprises all values (from zero to infinity) for both parameters. However, relevant portions 412, 414, 416 of the OD may comprise only part of the OD. In this example, the system may only be able to classify objects only for certain combinations of altitude and speed. The OD portions may in general have any shape, depicting a specific subsets of combinations of altitude and speed. For example, first and second OD portions 412, 414 are defined by ranges of speed and altitude, and third OD portion 416 is defined in part by threshold values for altitude and speed, in part by certain ratios for altitude and speed.

In this example, the OD partitions are non-overlapping. Defining non-overlapping (i.e. disjunct) OD partitions is preferred to avoid unnecessary testing of the system multiple times under the same conditions. In an example, the evaluation data may comprise an evaluation dataset comprising input data and ground truth data for first and third OD partition 412, 416, but not for second OD partition 414. In this case, system output data may be generated by an emulator for the second OD partition 414 based on the evaluation data for the first and second OD partitions 412, 416.

In particular, the input data may comprise data generable by sensor 402, such as camera images of a fixed set of objects 404 for each of the OD partitions. The system output data generated by the vision model may include identifiers and bounding boxes of objects. The evaluation result data may comprise an indication of whether an object was correctly identified.

### Reference signs

- 100: Operational domain (OD)
- 102: First condition
- 104: Second condition
- 106: First OD partition
- 108: Second OD partition
- 110: Evaluation data
- 112: First subset
- 114: System input
- 116: Criteria
- 118: Ground truth
- 120: Metadata
- 122: Second subset
- 124: System input
- 126: Criteria
- 128: Ground truth
- 130: Metadata
- 200: Method of evaluating a system
- 202-224: Steps of method 200
- 300: Evaluation dataset
- 302: First subset
- 304: Second subset
- 306: System
- 308: Emulator
- 310: System output data
- 312: First subset of the system output data
- 314: Second subset of the system output data
- 316: Third subset of the system output data
- 318: Evaluation function
- 320: User-defined parameters / metrics
- 322: Data generator
- 324: Evaluation result data
- 326: First evaluation result dataset
- 328: Second evaluation result dataset
- 330: Third evaluation result dataset
- 332: Aggregator
- 334: Final output
- 400: System
- 402: Sensor
- 404: Object
- 408: Altitude
- 410: Speed
- 412: First OD partition
- 414: Second OD partition
- 416: Third OD partition

## Claims

1. A computer-implemented method of evaluating a system (306, 400), the method comprising:
determining (202) evaluation data (110) suitable to evaluate the system (306, 400);
determining (204) an Operational Domain, OD (100), of the system (306, 400), wherein the OD (100) is indicative of one or more conditions under which the system (306, 400) may operate;
partitioning (206) the OD (100) into one or more OD partitions (106, 108), wherein an OD partition (106, 108) indicates a subset and/or range of the one or more conditions;
determining (212) evaluation result data (324) comprising a corresponding evaluation result dataset (326, 328, 330) for each OD partition (106, 108), wherein the evaluation result data (324) is determined based on the evaluation data (110) and, preferably, on system output data (310) generated and/or generable by the system (306, 400) based on the evaluation data (110); and
providing (224) a final output (334) indicating for which of the one or more OD partitions (106, 108) the corresponding evaluation result dataset (326, 328, 330) meets a predetermined criterion (116, 126), in particular a threshold.

2. The method of claim 1, wherein determining (212) the evaluation result data (324) comprises determining (216) the system output data (310) by the system (306, 400) based on the evaluation data (110).

3. The method of any of the preceding claims, wherein determining (212) the evaluation result data (324) comprises determining (218) the system output data (310) by an emulator (308) operable to emulate the system (306, 400) based on the evaluation data (110).

4. The method of any of claims 2-3, wherein determining (214) the system output data (310) by the system (306, 400) and/or emulator (308) comprises generating a first subset of the system output data (310) based on a first subset (112) of the evaluation data (110) corresponding to a first OD partition (106, 108), and determining a first corresponding evaluation result dataset (326, 328, 330) based on the first subset (312) of system output data (310).

5. The method of claim 4, wherein determining (214) the system output data (310) comprises determining the first subset (312) of the system output data (310) by the system (306, 400) and determining a second subset (316) of the system output data (310) by the emulator (308) a second OD partition (106, 108) of the OD partitions (106, 108) based on the first corresponding evaluation result dataset (326).

6. The method of any of the preceding claims, wherein determining (212) the evaluation result data (324) comprises determining a first evaluation result dataset (326) for at least one first OD partition (106, 108), and determining a second evaluation result dataset (328) for at least one second OD partition (106, 108) based on the first evaluation result dataset (326), preferably by:
extrapolating and/or interpolating the first evaluation result dataset (326); and/or
determining, via a data generator (322), the second evaluation result dataset (330), wherein the data generator (322) preferably comprises a machine learning model trained on previously determined evaluation data (110), in particular evaluation metadata (120, 130), and corresponding previously determined evaluation result data (324).

7. The method of any of the preceding claims, wherein determining (112) evaluation result data (324) comprises one or more of:
comparing the system output data (310) to a ground truth (118, 128) related to, in particular comprised in, the evaluation data (110), wherein the ground truth (118, 128) is preferably generated by a reference system; and/or
comparing the system output data (310) to a user-determined reference, in particular a threshold;

8. The method of claim 1, wherein the evaluation data (110) comprises one or more of:
an evaluation dataset (300) preferably comprising system input data (114, 124) processable by the system;
one or more criteria (116, 126) according to which the system may be evaluated;
a ground truth (118, 128) for evaluating the system; and/or
metadata (120, 130) of the evaluation dataset, wherein the metadata (120, 130) are preferably indicative of the conditions.

9. The method of any of the preceding claims, wherein partitioning the OD (100) into the OD partitions (106, 108) includes:
performing the partitioning based on user input, and/or
performing the partitioning based on the evaluation data (110).

10. The method of any of the preceding claims, wherein partitioning (206) the OD (100) into the OD partitions (106, 108) includes:
partitioning at least one numerical range of the OD (100) into intervals, preferably intervals of equal length;
partitioning the OD (100) such that each subset of the evaluation data (110) corresponding to an OD partition (106, 108) contains an equal amount of data;
partitioning only a part of the OD (100) into a plurality of OD partitions (106, 108);
partitioning the OD (100) according to one or more categories;
partitioning a first variable of the OD (100) depending on a value of second variable of the OD (100); and/or
partitioning the OD (100) based on a user input.

11. The method of any of the preceding claims, further comprising, preferably iteratively, re-partitioning (222) the OD (100) into one or more new OD partitions (106, 108), wherein re-partitioning is based on:
any user input;
the evaluation data (110);
the system output data (310);
any evaluation result data (324); and/or
the or a previous partitioning and/or re-partitioning of the OD (100).

12. The method of any of the preceding claims, wherein determining (212) the evaluation result data (324) includes determining performance metrics and/or data metrics, wherein
the performance metrics are indicative of a quality of the system output data (310), and
the data metrics are indicative of a quality of the evaluation data (110), and
wherein providing (224) the final output (334) includes providing an indication for which of the one or more OD partitions (106, 108) the performance metrics and/or data metrics meet a, preferably respective, predetermined criterion (116, 126).

13. The method of any of the preceding claims, wherein
the system (306, 400) comprises a machine learning, ML, algorithm, and/or
the evaluation data (110) comprises sensor data, preferably one or more images.

14. A system comprising one or more processors and one or more storage devices, wherein the system is configured to perform the computer-implemented method of any one of claims 1-13.

15. A computer program product for loading into a memory of a computer, comprising instructions, that, when executed by a processor of the computer, cause the computer to execute a computer-implemented method of any of claims 1-13.
